# EUROPEAN PATENT SPECIFICATION

(11) **EP 3 113 599 B1**
(45) Date of publication and mention of the grant of the patent: **04.03.2020**
(21) Application number: 14884538.1
(22) Date of filing: 15.10.2014
(51) Int. Cl.: A01F 25/14, B65B 25/04, B65D 85/34, B65D 6/18, B65D 25/00

(54) **ARRANGEMENT OF PLASTIC SHIPPING CONTAINERS**
ANORDNUNG VON FRACHTCONTAINERN AUS PLASTIK
AGENCEMENT DE CONTENEURS DE FRET EN PLASTIQUE

(30) Priority: 05.03.2014 US 201461948289 P; 22.04.2014 WO PCT/US2014/035055
(43) Date of publication of application: 11.01.2017
(73) Proprietor: Arena Packaging, LLC, Rochester, NY 14615 (US)
(72) Inventor: WILCOX, Donald E., Rochester, NY 14626 (US); ARENA, Charles S., Rochester, NY 14615 (US)
(74) Representative: Vossius & Partner Patentanwälte Rechtsanwälte mbB
(86) International application number: PCT/US2014/060627
(87) International publication number: WO 2015/134067

(56) References cited:
- EP-A1- 2 371 727
- DD-A5- 299 287
- GB-A- 1 279 245
- US-A- 4 820 383
- US-A- 5 109 999
- US-A- 5 556 658
- US-A- 5 617 711
- US-A1- 2004 099 662
- US-A1- 2005 204 705
- US-A1- 2007 084 864
- US-A1- 2009 261 092
- US-A1- 2013 146 602

## Description

### BACKGROUND

### Technical Field:

Containers that can be reused and that are suitable for the storage and transportation of produce.

### Background:

Bananas are harvested in the tropical regions of Central and South America for consumption in North America. North American retailers of bananas specify the shipment of bananas on standard GMA (Grocery Manufacturers Association) pallets with a nominal footprint of 48" x 40". North American retailers further specify that bananas be packaged in increments of 40 lbs. net product weight delivered to retail distribution centers. Bananas are typically shipped in refrigerated intermodal containers (Containers) via container ships from ports in South and Central America to ports on the east, central and west coast of the USA, then over the road to distributions centers. Standard 40-foot reefer containers can accommodate a total door loading height of about 83". GMA pallets have a nominal height of 5.5", allowing a net packaged product height of about 77.5". It is desirable to minimize the cost and environmental impact of shipping bananas by maximizing the quantity of bananas in 40 lb. package increments in a 48" x 40" x 77.5" rectangular prism, while also maximizing the delivered quality of the fruit.

Prior to this invention, the industry-standard method for packaging bananas for shipment to North American retailers has been to pack in corrugated cardboard boxes that have been tailored to this application. Corrugated boxes for bananas are a 2-piece construction with outside dimensions of about 19.7" (50 cm) x 15.75" (40 cm) x 9.69" (24.6 cm) in height weighing 3 lbs. each. These boxes maximize the available space by fitting 2 boxes across the 40" dimension of the pallet and 3 boxes across the 48" dimension of the pallet for a total of 6 boxes per layer stacked 8 layers high on the pallet. The 2-piece box consists of a bottom box and a top cover that telescopes the full height of the box to contribute to stacking strength with double wall construction. In order to deliver 40 lbs. net weight of bananas, corrugated boxes are packed with about 41.5 lbs. of green fruit at the farms. Corrugated boxes weigh approximately 3 lbs. each, resulting in container loads that approach both the weight limit and the cubic space or cube limit of containers.

Bananas are cut from stems into clusters of 4 to 9 banana fingers; each cluster having 2 rows of bananas referred to as the inner whirl on the concave side of the cluster and the outer whirl on the convex side of the cluster. Boxes are typically packed with 15 to 17 clusters per box to meet the net weight specification for major North American retailers. These clusters are packed in 4 lines or rows of fruit, crowns and inner whirl down, with each line containing 4 to 5 clusters across the longer 19.7" dimension of the box. The first 2 lines are packed overlapping in the center of the box with the 2 additional lines of fruit packed left and right overlapping the first two lines such that the bananas are stacked up to 3 clusters or 6 banana fingers high in the box and with the 2nd line completely surrounded by bananas in the 1st, 3rd and 4th lines.

The 4-line pack used in the traditional corrugated boxes generally results in the height of the fruit exceeding the height of the box at the time of packing, or high pack. The telescoping lid facilitates this high pack while still permitting boxes to be stacked on pallets. 41.5 lbs. of green fruit also cause flexible boxes to bulge in all directions. Due to the initial high pack situation with 4 lines of fruit combined with the tendency for bottoms to sag, stacking load is transferred directly through the bananas and ultimately shared between the bananas and the structure of the corrugated box. This stacking load on the bananas causes various forms of damage to the bananas including damage to crowns, feeder lines (necks), latex staining, point scaring and high pack damage.

To maximize stacking and handling strength of corrugated cardboard boxes, ventilation is very limited, making it more difficult to control the atmosphere around the bananas during cooling and ripening. The insulation value of 2 or more layers of corrugated also adds to difficulty of controlling the temperature of bananas during the ripening process.

Problems associated with this present method include:
- High and rising recurring cost of single-use disposable corrugated boxes.
- High environmental burden of disposable corrugated boxes in terms of solid waste and greenhouse gas emissions.
- Damage of bananas in transit due to high pack, bottom sag and load transfer through the bananas.
- Load instability and damage of bananas in transit due to failure or breakdown of corrugated boxes in a high moisture environment.
- Difficulty in controlling temperature and atmosphere around the bananas when packed in corrugated boxes due to lack of ventilation and insulation value of the corrugated boxes. Bananas are ripened in boxes placed in a ripening chamber or ripening room, where control of the temperature and atmosphere around the bananas is critical to optimum ripening.

In the past, attempts to duplicate the dimensions of the corrugated box with a more rigid, 5-sided, open top Reusable Plastic Containers (RPCs) have proven to be unsuccessful in shipping bananas. RPCs with covers, like corrugated banana boxes, have proven to be costly, inefficient and weight prohibitive. Rigid RPCs with 4 walls and a base are designed to handle all stacking load transferred through the walls and base of containers to the pallet with a safety margin to achieve many years of life. RPCs further rely on interlocking geometry of about .250" in of depth to prevent RPCs from shifting on pallets between layers. When RPCs are high packed, as in the case of a 4-line banana pack in an RPC of about 19.7" (50 cm) x 15.75" (40 cm) x 9.69" (24.6 cm) in height, the base of the top RPC in a stack may not come in contact with the walls of the RPC below, preventing proper stacking and interlocking. The rigid nature of the RPC, along with the lack of a telescoping cover to protect the fruit, also exacerbates hard pack damage associated with high pack. This common 6-down, 8 high banana box configuration does not successfully translate from corrugated to RPC construction.

In the past, attempts have also been made to solve these problems using conventional RPCs that are otherwise used successfully to transport many other produce items to North American retailers. Conventional RPCs have a footprint of about 23.5" (60 cm) x 15.75" (40 cm). This footprint utilizes the footprint of 48" x 40" GMA pallet with a row of 3 RPCs lined up with the narrow RPC dimension of 15.75" across the 48" dimension of the pallet on one edge and a row of 2 RPCs turned perpendicular to the first row with the longer 23.5" dimension across the 48" dimension of the pallet. This is referred to as a 5-down footprint.

Conventional RPCs can be packed with 3 lines of fruit to achieve the 41.5 lbs. green fruit target due to the greater length of the container of 23.5" vs. the length of corrugated boxes of 19.7", however the reduced number of containers per layer on the pallet of 5 vs. 6 dramatically reduces the quantity of bananas per pallet load. This issue has been somewhat mitigated by reducing the height of the RPC from 9.65" with the corrugated to about 9.22" in order for containers to be stacked 9 high on a pallet, by taking advantage of the reduced height of a 3 line pack, while introducing increased risk of high pack damage. However, this configuration still results in 6.25% less fruit per pallet load with only 45 (5 per layer, 9 high) containers per pallet load in comparison to 48 (6 per layer 8 high) containers per pallet load with corrugated. This loss in volume efficiency manifests itself as a gap in the center top of the RPC between the top 2 lines of fruit, since the RPC is just as wide as the corrugated box, but with one less line of fruit. Furthermore, conventional RPCs of these dimensions weigh about 4 lbs., reducing the net payload of bananas even in trailers with larger volume capacity when compared with bananas in 3 lb. corrugated boxes.

Such efforts have not been successful in the North American market to date due to problems associated with using conventional RPCs with bananas, including:
- Conventional RPCs hold fewer bananas per pallet load than corrugated boxes due to only five (5) containers per layer fitting on a pallet versus six (6) containers per layer, increasing freight cost.
- Optimum ventilation across the about 40" dimension of the pallet cannot be achieved with conventional RPCs due to the perpendicular pattern of pallet loading.
- Optimization of RPC height to maximize pallet density results in "high packs" that can cause damage to the banana at the top of a container by the container above.
- Rigid RPC walls can also cause damage to bananas relative to more flexible corrugated walls.
- No reusable means for easy sampling of fruit without de-stacking the RPCs.
- Conventional RPCs cannot duplicate the net payload achieved with corrugated banana boxes even in larger over the road trailers due to the greater tare weight of the container of 4 lbs. vs. 3 lbs. for corrugated.

EP 2 371 727 A1 relates to crates comprising a bottom and two respective pair wise opposing side walls and end walls, each side wall comprising a plurality of vent holes in a region extending along a horizontal direction of the side wall, and each end wall comprising a grip hole.

US 2009/261092 A1 relates to assemblies for storing and transporting items, and more particularly to a collapsible container including structural components and features configured to provide increased stability of the container and allow for the storage and transportation of damage-sensitive items, such as bananas and other products.

DD 299 287 A5 relates to corrugated cardboard containers which are used in handling, processing and shipment of fruit, such as bananas.

US 2013/146602 A1 relates to a container comprising a base, first opposed side walls and second opposed side walls, wherein at least one of the base and side walls comprises a combination of a frame part and a liner part, the frame part forming between about 10% and 100% of a surface of the at least one of said base and opposed side walls.

### SUMMARY

It is provided an arrangement of plastic shipping containers comprising bananas according to claim 1.

Novel designs for containers and container arrangements have been developed that possess advantageous properties and functionality. For example, the containers and container arrangements as described herein can solve problems associated with conventional corrugated banana boxes, RPCs with the dimensions of conventional boxes, conventional arrangements and conventional RPCs with a 5-down footprint. The novel designs can provide a more economical system for packing, cooling, shipping, ripening and merchandising bananas (and possibly other fruits, vegetables and produce items) that can improve food quality and reduce environmental impact.

Examples can include one or more of these features:
New 6-Down Footprint - An example is directed to an arrangement of plastic shipping containers for produce (e.g., bananas). The arrangement comprises (a.) a pallet having a top surface, the top surface having a pallet length and a pallet width, (b.) six shipping containers cach having a container length and a container width arranged on the top surface of the pallet in a layer. The containers are arranged in two rows, each row having three containers. Each of the six shipping containers has its container width extend in the direction of a row and in the direction of the pallet width and having its container length extend in the direction of the pallet length. The arrangement further comprises bananas in each container, the bananas disposed in a three-line configuration with their crowns facing down. Such containers typically have open top designs, but may include a cover. An exemplary container can incorporate a reverse pallet loading pattern with three (3) containers across the approximately 40-inch dimension of the pallet and two (2) containers across the approximately 48-inch dimension. This pattern is achieved with container maximum exterior dimensions of about 24" (60.96 cm) in length x 13.33" (33.87 cm) in width. This is in contrast to the corrugated loading pattern with two (2) containers across the about 40-inch dimension and three (3) across the about 48-inch dimension. This footprint facilitates packing of three (3) longer lines of fruit per container versus four (4) shorter lines in a corrugated box. Three (3) lines pile a maximum of 2 clusters or 4 banana fingers high with one line on the bottom of the RPC, one line on the top left and one line on the top right extending across the longer 24" dimension of the RPCs. This is in comparison with the 4 line corrugated pack where lines are piled up to 3 clusters high or 6 banana fingers high. This results in less "high pack" damage with an RPC that is the same height as the corrugated box of about 9.65". This lower pack height also facilitates the interlocking stacking of one open top RPC on top of the walls of another open-top RPC not achieved with RPCs of the same dimension as corrugated boxes. Although the above specifications for lengths and widths of pallets are typical in North American markets, it will be appreciated that aspects of the invention can be applied to pallets having other lengths and widths as may be used in other parts of the world and in selected applications in North America.

The narrower about 13.33" (33.87 cm) dimension of the new RPC optimizes the width of the RPC for a 3-line pack thus eliminating the open channel in the top center of a 3 line pack in a wider 15.75" (40 cm) 5-down RPC.

Further advantages of the new reverse 6-down footprint include exposure of all 3 lines of fruit in each RPC to forced air in ripening chambers in contrast to 4 line packs in corrugated boxes where the 2nd line of fruit is totally encapsulated in the other 3 lines. In some embodiments according to the above-described aspect of the invention, a container arrangement further comprises a second plurality of containers each having bananas therein. The second plurality of containers is arranged to form one or more additional layers of containers (e.g., seven additional layers) arranged above the first layer, wherein each of the additional layers comprises six shipping containers each having a container length and a container width similar to the first layer. The total number of layers may for example, be limited by a height of the shipping vessel in which the arrangement is to be shipped. The containers in each of the additional layers are arranged in two rows each row having three containers, each of the six shipping containers having its container width extend in the direction of a row and in the direction of the pallet width and having its container length extend in the direction of the pallet length. Also similar to the first layer, the bananas in each of the second plurality of containers are disposed in a three-line configuration with their crowns facing down.

Increased Ventilation -The new pallet loading pattern, combined with the high-strength plastic construction also facilitates much greater ventilation across the top and/or bottom of each row of fruit or produce. The vent holes of the container are substantially greater than the size of the vent holes provided in conventional corrugated or RPC containers. The vent area for the container may be about two times greater, about three times greater, about four times greater or about five times greater than the ventilation provided in a conventional corrugated or RPC container. This allows for increased ventilation. The greater ventilation can be about two times greater, about three times greater, about four times greater or about five times greater than the ventilation provided in a conventional corrugated or RPC container. This is in sharp contrast to the pattern found in corrugated packs, where minimal ventilation is permissible and one of the four lines is almost completely insulated from ventilation. Greater ventilation translates into better cooling, temperature management, ripening control, quality and shelf life for the produce in the container. This new pattern also solves the problems of conventional RPCs, permitting (1) equal container load volume for equal freight cost when compared to corrugated packs, (2) less "high pack" damage due to a taller container, (3) less wasted space due to a better fit, with a three-line pack in a narrower container, and (4) much better ventilation due to the alignment of containers and vents across the approximately 40-inch pallet dimension through which all airflow is forced in ripening chambers. The new pallet loading pattern allows the ventilation holes to line up consistently through all containers, there are reduced opening and channels for escape of forced air (often used in the ripening process), and this results in improved temperature management capabilities.

Greater Container Length and/or Width When Set Up Than When Folded Down -It is highly desirable to have the maximum possible length and/or width of crates or boxes without those crates or boxes overhanging the pallets on which they rest. This allows the proper use of corner boards and straps to secure the crates in storage and transport. In the case of exemplary embodiments of the new crate design, this optimum exterior length is about 24 inches (about 60.9 cm). However, the crates will be used in the North American retail supply chain where they will often be mixed with conventional RPCs that are only about 23.5 inches (60 cm) in exterior length. Therefore, it is desirable for the new crates to be about 24 inches long when set up and filled with fruit or produce, but only about 23.5 inches long when folded down to facilitate mixing of empty folded crates on pallets. This is accomplished by a unique and novel design approach that not only accomplishes increased length and/or width when set up, but also does so without increasing the height of folded crates to optimize return freight. The full approximately 24-inch length in the set-up mode maximizes fruit (e.g., banana) or produce capacity and eliminates pallet underhang of crates that exist with other RPCs. This facilitates proper use of corner boards and prevents or substantially limits the flow of air between pallet loads in ripening rooms, to enhance ripening control.

Fruit Sampling -It is often desirable to randomly sample a fruit while it is in boxes or crates that are often stacked eight (8) layers high in ripening rooms. Corrugated boxes are cut open for sampling, using a knife. This procedure can damage fruit unnecessarily, and weakens the box, potentially contributing to further box failure and fruit damage. Conventional RPCs have no non-destructive means for fruit sampling when crates are stacked. The new crate has a unique and novel sample door to provide fruit graders access to fruit in every crate on a pallet without de-stacking. This access door can be opened and closed repeatedly throughout the life of the crate without affecting the structural integrity of the crate, the protection of the fruit (e.g., bananas) or produce in the crate, or the life of the crate. The sample door may be contoured to match the interior and/or exterior contour of the wall in which the sample door is in, flexible to provide cushioning to the contents and to prevent damage, and tight-fitting in the wall in which the sample door is in so as not to create edges and gaps which could damage the contents.

Maximum Interior Volume -Exemplary embodiments of the crate can incorporate several additional features to maximize the internal volume of the crate and minimize damage to bananas. The floor of crates can be substantially flat and smooth monolithic sheets of plastic. This can maximize internal height and minimize damage to fruit (e.g., bananas) or produce in a crate from the crate above. Conventional RPCs incorporate features which project from a crate down into the crate below for interlocking and stacking. Exemplary embodiments of our crate can interlock with features that project up from the top of crate walls only. Interior walls are also curved outward to the maximum dimensions to maximize internal volume, with all structure located on the perimeter of walls away from the curved fruit or produce. This construction also makes walls more flexible, smooth, curved and compliant where they are contacted by the fruit (e.g., bananas) or produce, further minimizing fruit or produce damage.

Lead-in for Stacking -Conventional RPCs provide interlocking stacking, but no lead-in, so that crates have to be perfectly aligned in length and width for proper stacking. Without such perfect alignment, a conventional RPC crate corner may drop down into the crate below and damage fruit or produce. Exemplary embodiments of our crate's unique design include about 1/8 inch to about 1/2 inch of lead-in in both the length and width dimensions for easier stacking. Exemplary crates can also be slid in and out of place for easier stacking and de-stacking.

Latching of Sidewalls -Conventional RPCs that are collapsible by folding are often designed to take on their set-up configuration by latching of their end walls. In contrast, exemplary embodiments of our crate's unique design employ latching of the sidewalls.

Thus, according to one aspect, an exemplary RPC provides a "collapsed" configuration or an "erected" configuration comprised of a base, capable of being coupled or attached to a plurality of sidewalls and a plurality of endwalls. The RPC can further include two sidewalls, each sidewall coupled or attached to the base so as to be movable between an upright position when the container is in an "erected" position and a folded-down position when the container is in a "collapsed" position. The RPC can further include two endwalls, each endwall coupled to the base so as to be movable between an upright position when the container is an "erected" position and a folded-down position when the container is in a "collapsed" position. The RPC can further include an opening in each endwall for use as a handle for the container. The RPC can further include one or more latches on each endwall, each configured to couple an endwall to a sidewall when the container is in the "erected" configuration. The RPC can further include one or more stops on each sidewall, each stop corresponding to a latch and configured to be in contact with that latch when the container is in the "erected" configuration. While the above embodiment is designed with the latch on the endwall, embodiments may include a latch on the endwall and/or sidewall. It is to be appreciated that the expression "an endwall coupled to a sidewall" and "a sidewall coupled to an endwall" are used interchangeably. Each expression refers to, both, designs where the endwall includes a latch or actuation mechanism to achieve coupling between the sidewall and sidewall, and where the sidewall includes a latch or actuation mechanism to achieve coupling between the sidewall and endwall.

In an exemplary embodiment, the arrangement of plastic or resin shipping containers for shipping or storing bananas includes six shipping containers arranged on a top surface of a standard 48"-by-40" pallet, with three of the containers arranged across the 40" dimension of the pallet and two containers arranged across the 48" dimension of the pallet. The arrangement provides three lines of bananas within each container compared to four shorter lines of bananas provided in a conventional corrugated cardboard box. By providing three lines of bananas within each container, the bananas in the containers of the arrangement do not pile as high as the bananas in a conventional corrugated cardboard box, which results in less "high pack" damage to the bananas in the containers of the arrangement when compared with bananas provided in the conventional corrugated cardboard box.

In an exemplary embodiment, the arrangement of plastic or resin shipping containers for shipping or storing bananas and providing enhanced ventilation to the bananas in the containers includes two or more containers arranged on a top surface of a standard 40"-by-48" pallet. In this arrangement, each container has two endwalls and two sidewalls and a plurality of vent holes in each of the sidewalls or endwalls. At least one container is arranged across the 40-inch dimension of the pallet and at least one other container is arranged across the 48-inch dimension of the pallet, so that the plurality of vent holes in the container sidewalls or endwalls completely or substantially align, providing enhanced ventilation to the bananas in the containers resulting from airflow passing through the pallet load in only one direction through the plurality of vent holes in the container sidewalls or endwalls.

According to an aspect of the invention, each of the containers comprises a base, two endwalls, and two sidewalls, each of the endwalls and each of the sidewalls being moveably coupled to the base to allow the container to assume an erected configuration when the sidewalls and endwalls are all upright, and a folded-down configuration when the sidewalls and endwalls are all folded down. Each of the sidewalls may be detachably coupled to the two endwalls. In an exemplary embodiment, a resin or plastic shipping container for shipping or storing produce includes two endwalls and two sidewalls that are moveably connected or attached to each other to allow the container to assume an "erected" configuration, where the sidewalls and endwalls are all upright, and a "folded-down" configuration, where the sidewalls and endwalls are all folded down. In this embodiment, the container has a greater maximum, exterior length and/or maximum, exterior width in the "erected" configuration than in the "folded-down" configuration.

In an exemplary embodiment, a resin or plastic shipping container for shipping and storing produce and facilitating sampling of the produce during shipping and storage includes two endwalls and two sidewalls. At least one of the sidewalls or endwalls has a sample door to allow one to non-destructively access produce in the container without having to de-stack the container from a stack comprised of multiple containers positioned on top of one another. The sample door is moveably connected to the at least one sidewall or endwall so that it can be repeatedly opened and closed without adversely affecting structural integrity of the container, without damaging produce in the container and without limiting the useable life of the container.

In an exemplary embodiment, a resin or plastic shipping container for shipping or storing produce provides increased interior volume for holding produce and includes a substantially flat and smooth interior floor and substantially smooth exterior floor that maximizes internal height and minimizes damage to produce in the container from another container that is stacked on top of the container.

In an exemplary embodiment, a resin or plastic shipping container for shipping or storing produce allows "lead-in" stacking on top of another container. The container may include about 0.25" lead-in in length and/or width dimensions that allows for easier stacking of the container on top of another container than is possible with conventional reusable plastic containers that have interlocking stacking capability but no lead-in. As used herein, the terms "length" and "width" are used in reference to a rectangular object or an object having a rectangular cross section. The term "length" describes a linear dimension that is the longest dimension between two opposing sides (also referred to herein as walls) of the object. The term "width" describes a linear dimension that is the longest dimension between the other sides in a direction perpendicular to the length. A length and a width of pallet refers to the length and width of the top surface of the pallet unless otherwise specified; and a length and a width of a container refers to the maximum length and the maximum width of a container unless otherwise specified. It will be appreciated that a maximum length and a maximum width of an object, such as a container, may occur in different planes parallel to the base of the container. It will be appreciated that the above definitions of lengths and width apply to objects having substantially rectangular cross sections such as a pallet or container which, in the case of pallets, typically deviate from a rectangular shape because of construction from planks of wood having space therebetween, and containers, which typically have a cross section that is rectangular with some deviation resulting contours in the walls of the container.

### BRIEF DESCRIPTION OF THE DRAWINGS

FIG. 1 is a perspective view of a collapsible container in accordance with an exemplary embodiment, showing the endwalls and sidewalls.
FIG. 2 depicts six containers of the exemplary embodiment arranged in a single layer "six-down" configuration on a pallet.
FIG. 3 depicts the intended airflow pattern through a plurality of containers of the exemplary embodiment that are stacked in a multi-layer "six-down" configuration.
FIG. 3a depicts a container viewed from the side, showing the vent holes through which air may flow.
FIG. 4 depicts a perspective view of the latch mechanism once it has coupled one endwall of the container to one sidewall of the container.
FIG. 5 depicts a perspective view of the latch mechanism as the sidewall is being moved toward the endwall to engage the latch and couple the sidewall to the endwall.

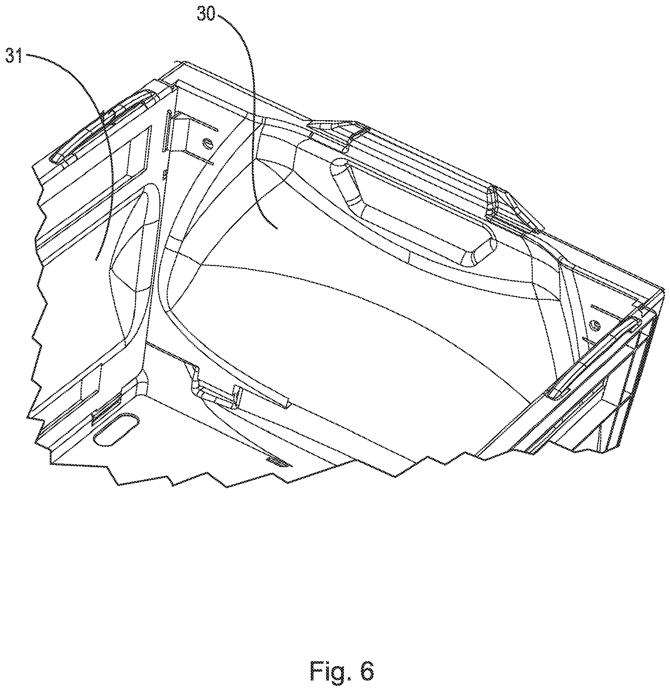

FIG. 6 depicts a perspective view of the container that shows the recessed areas present in the endwalls and sidewalls.
FIG. 7 depicts a perspective view of part of the sidewall in isolation from the rest of the container, with an access door on the sidewall and the door in the open position.
FIG. 7a depicts a cross section of the sidewall showing the access door in the closed position, with the access door coupled to the sidewall through the use of a clip.
FIG. 8 depicts a cross section of a sidewall and endwall once coupled through the use of "L" hooks.
FIGS. 9a, 9b, and 9c depict three line packing of bananas in an exemplary embodiment of a container with bananas.
FIG. 10a depicts the profile of one end of the container when in the "collapsed" configuration.
Fig. 10b depicts the profile of the same end of the container as shown in FIG. 10a when in the "erected" configuration, showing the additional length of the container in the "erected" configuration when compared to the length of the container in the "collapsed" configuration.

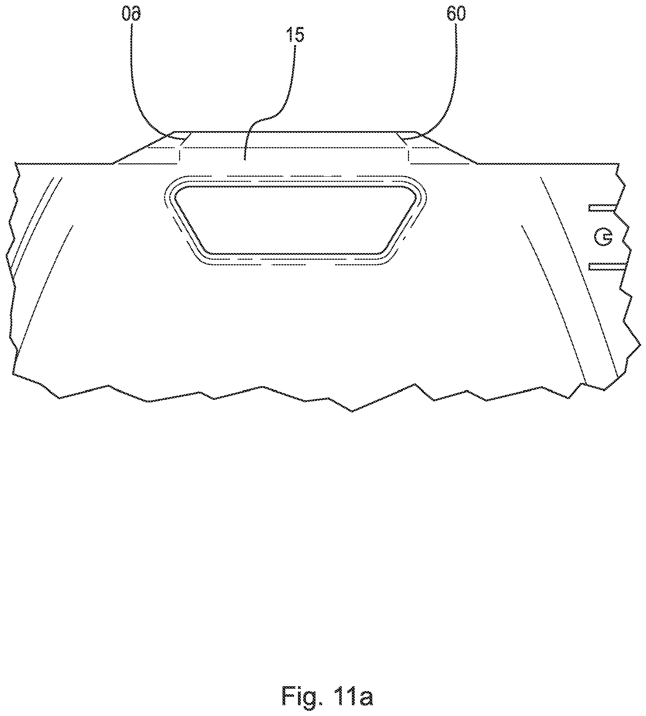

FIG. 11a depicts an endwall and its handle, where lead-in material can be located.

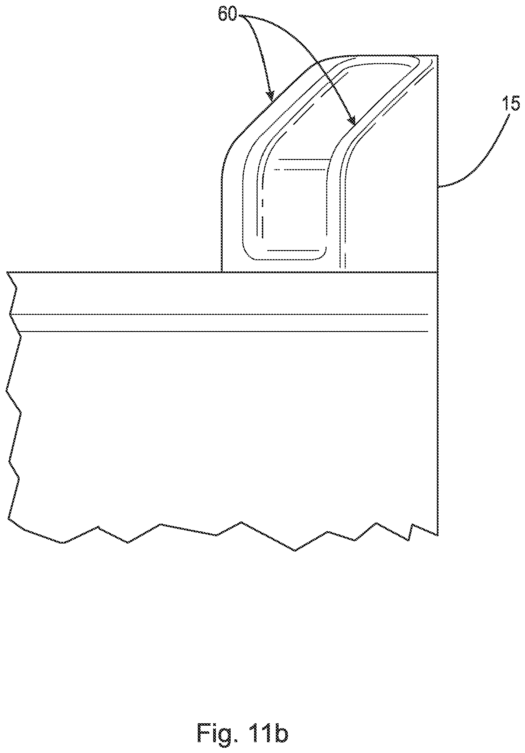

FIG. 11b depicts an enlarged view of the handle of FIG. 11a, rotated about 90 degrees, showing the lead-in material.

### Drawings -reference numerals:

- **10:**: collapsible container
- **11:**: endwall
- **12:**: sidewall
- **13:**: base
- **14:**: ventilation hole
- **15:**: handle

- **20:**: latch
- **22:**: stop
- **23:**: inside edge of sidewall

- **30:**: recess in endwall
- **31:**: recess in sidewall

- **40:**: door
- **41:**: clip
- **42:**: latch bracket
- **45:**: hinge
- **47:**: door hinge

- **50:**: "L" hook
- **60:**: lead-in
- **50:**: "L" hook
- **60:**: lead-in

### DETAILED DESCRIPTION

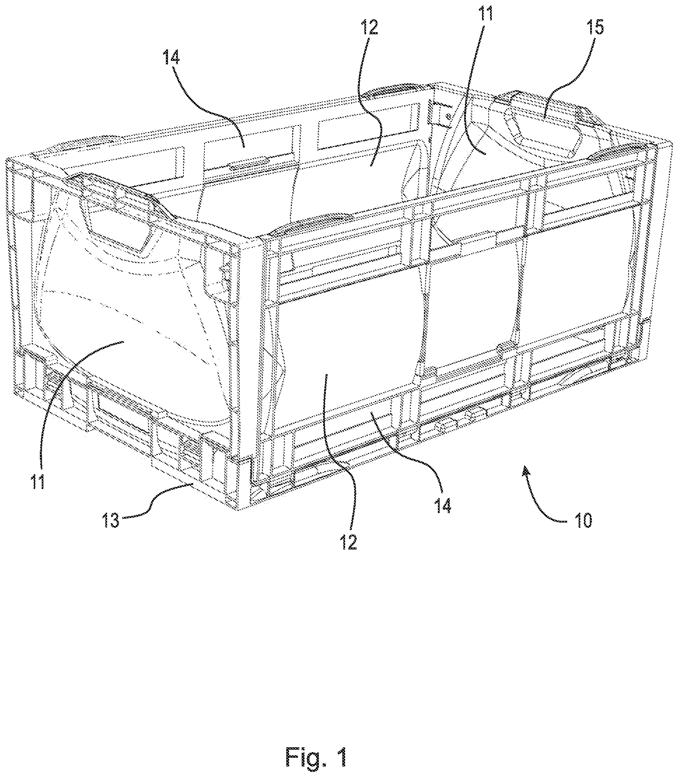

An exemplary embodiment of a container is depicted in FIG. 1 as a collapsible container **10** for the storage and transport of produce. The container **10** as fully erected includes a base **13** that extends in a horizontal plane, two endwalls **11** that extend in respective vertical planes, and two sidewalls **12** that extend in respective vertical planes.

The container **10** is molded from a plastic or resin material, such as, for example, polypropylene, a resin or thermoplastic polymer or combination thereof. Suitable materials can include resins, plastics or thermoplastics including, but not limited to, polyethylene, polypropylene, polyvinyl chloride, polyurethane, polyester, epoxy resin, phenolic resin, polystyrene, polycarbonate, combinations thereof and the like. The term "plastic" is used generically herein in its conventional manner and refers to any of the above-listed materials or other similar materials now existing or later developed. The container **10** has a construction that is designed to be strong relative to its weight. The material of the container allows it to be rigid enough to maintain its structural form when erected for storage or transportation, thereby protecting the produce it contains. At the same time, the material of the base **13,** endwalls **11,** and sidewalls **12** of the container **10** are flexible enough to minimize damage to the contents of the container.

The interior of the container **10** is primarily defined by the base **13,** sidewalls **12** and endwalls **11.** A handle **15** is located near the top center of each endwall **11.** The base **13** may be a flat and smooth monolithic sheet of plastic. This maximizes internal height and minimizes damage to produce on the top of the container due to contact from the container above. The shape of the endwalls **11,** sidewalls **12,** and base **13** are designed to reduce bruising conditions for the contents of the container. There are expansive, recessed areas (**30, 31**) in the endwalls and sidewalls. Much of the structure of the container, including hinges **45,** stops **22,** and latches **20** (each of which will be detailed below), is designed to be located on the perimeter of the walls away from the curved contents of the container. Preferably, the container has features for interlocking with other containers that project up from the top of container walls. The endwalls **11** and sidewalls **12** are preferably curved outward to maximize internal volume, and are constructed to be flexible, smooth, curved and compliant to minimize damage due to contact with the contents of the container.

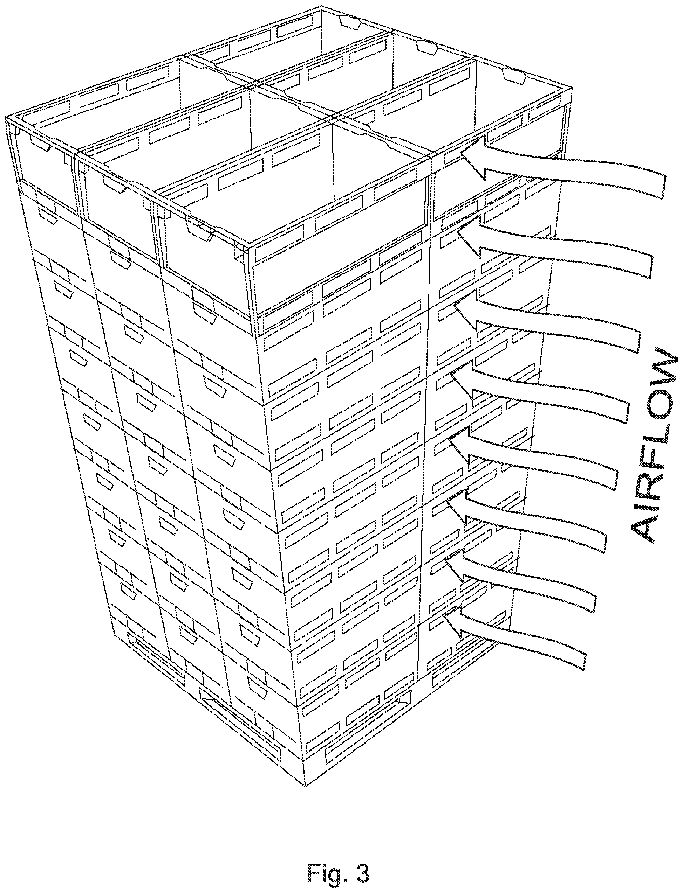

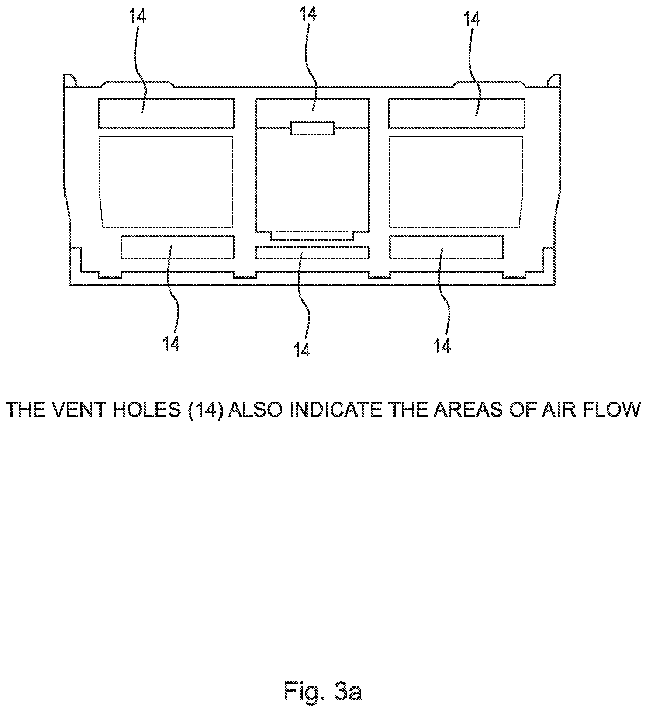

Because the container is designed to hold produce that may be purposely ripened while in the container, the container has various ventilation holes **14** along its sidewalls **12** and base **13,** which allow for forced air to travel to the produce while packed in the container. FIG. 3 depicts the intended airflow pattern through a plurality of containers of an exemplary embodiment that are stacked in a multi-layer "six-down" configuration. The placement of the ventilation holes **14** is designed to permit substantial alignment of the ventilation holes **14** of several containers when stacked on a pallet, which is a typical arrangement of the containers when filled with produce that are subject to ripening by forced air in a ripening room or ripening chamber. This alignment creates a pathway for the forced air to easily reach produce that is stacked in the containers throughout the pallet.

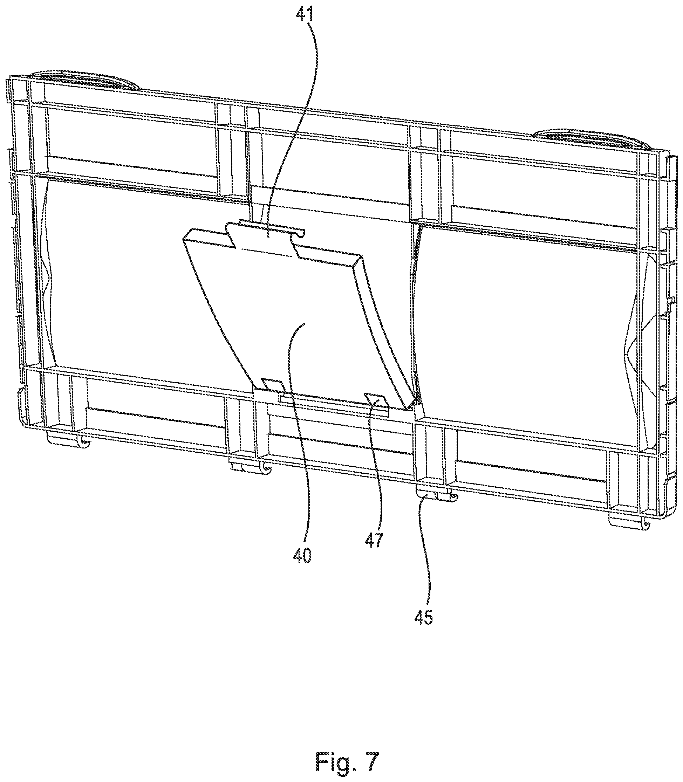

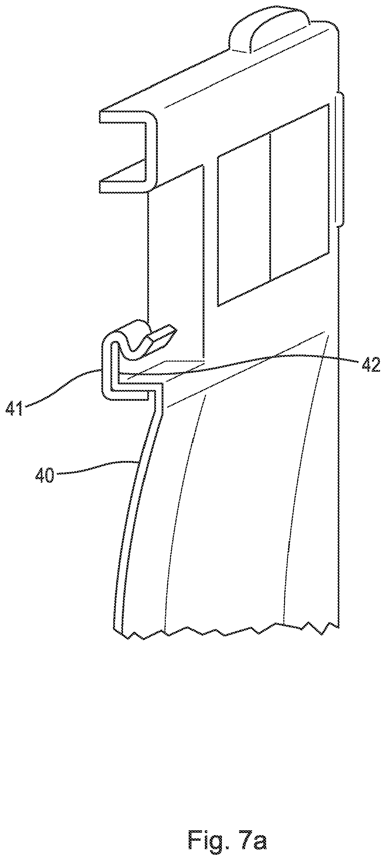

The endwalls **11** and sidewalls **12** of the container can be connected to the base **13** through the use of a plurality of hinges **45** or other movable couplings. FIG. **7** depicts the hinges **45** on the sidewall. The hinges **45** will permit the endwalls **11** and sidewalls **12** to be folded down toward the base **13** when the container is in the "collapsed" configuration, and the hinges **45** will allow the endwalls **11** and sidewalls **12** to be moved to an upright position when the container is in the "erected" configuration. In changing the container from the "erected" configuration to the "collapsed" configuration, the first sidewall **12** will be folded down over the base **13,** then the second sidewall **12** will be folded down toward the base **13** and will overlap part of the first sidewall **12.** Next, the two endwalls **11** will be folded down toward the base **13** and over the sidewalls **12.** This "collapsed" configuration results in the container being made much more compact than when in the "erected configuration." The relatively flat, compact container in the "collapsed" configuration can be easily transported for reuse. When in the "collapsed" configuration, many of the containers can be stacked for easy transport and/or storage.

From the "collapsed" or "folded down" configuration, the container can be changed into the "erected" configuration by first unfolding the endwalls **11** and raising each of them to an upright position. Then, one sidewall **12** is raised and is coupled to the two endwalls **11.** Finally, the second sidewall **12** is raised and is coupled to the two endwalls **11.**

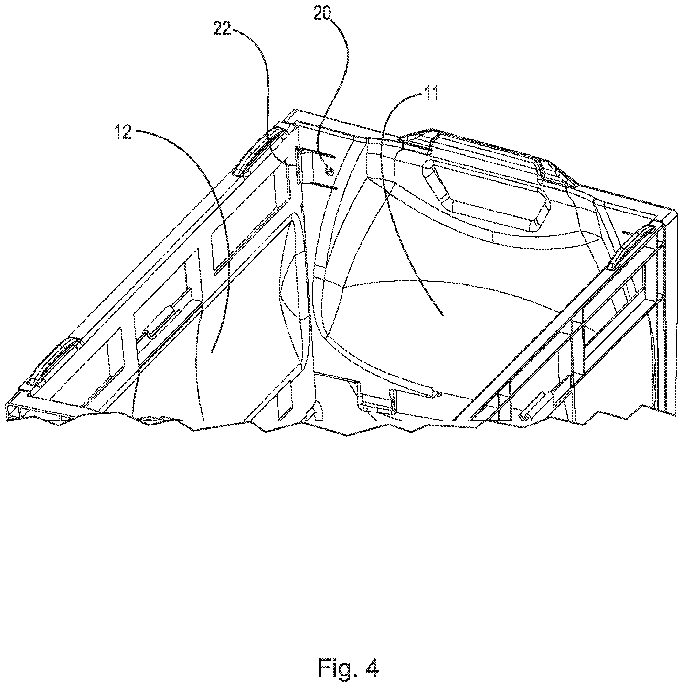

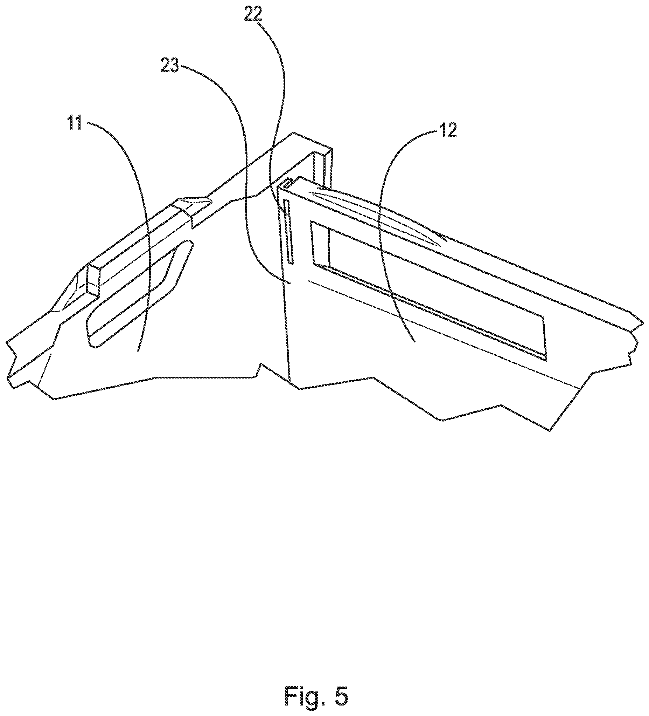

Several features of an exemplary embodiment of the container can aid in assembly, specifically the transition of the container from a "collapsed" configuration to an "erected" configuration. Some of these features are shown in FIG. 4 and FIG. 5. One of the features provides for detachable coupling of sidewall **12** to endwalls **11.** An exemplary embodiment of a detachable connection uses a latch **20** and stop **22** to couple the sidewall **12** to the endwall **11.** When the inside edge **23** of the sidewall passes the latch **20,** the latch **20** springs back into position and hits a stop **22** on the sidewall **12.** This contact between the latch **20** and stop **22** can result in a clicking sound that helps the user know that the latch **20** has engaged the stop **22** and that the endwall **11** and sidewall **12** are thereby coupled. The latch **20** can be flexed or otherwise actuated to enable it to first become displaced while the edge of the sidewall **12** contacts it and passes by it, but then spring back to engage the stop **22** on the sidewall **12.**

In an exemplary embodiment, the edges of each endwall **11** and sidewall **12** include a series of vertically-spaced "L" or "L"-shaped hooks **50** that allow an endwall **11** to interlock with a sidewall **12** when both are upright and overlap when the container is in the "erected" position. This further promotes close coupling of the endwalls **11** to the sidewalls **12,** promoting the structural integrity of the container **10** in the "erected" configuration and thereby reducing damage to the contents of the container.

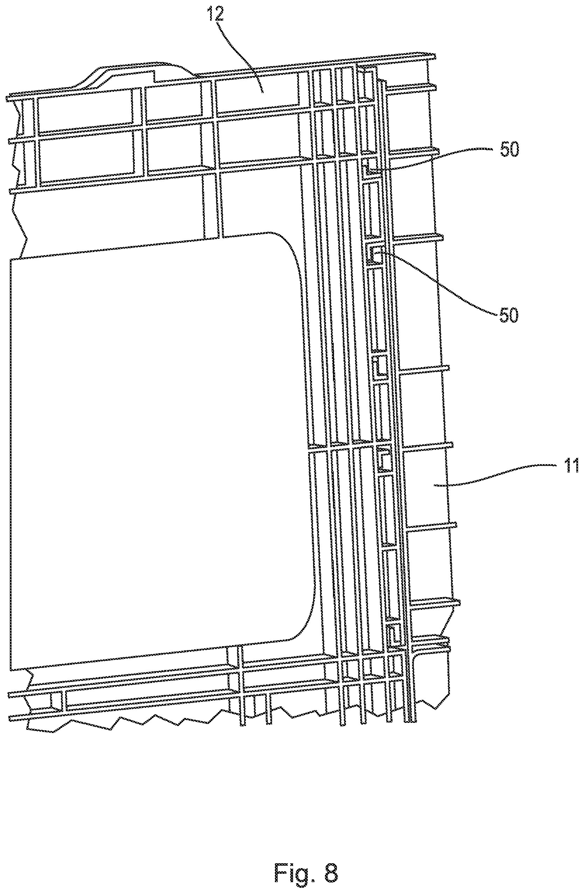

While many conventional RPCs are collapsible by folding, they are often designed to take on their set-up configuration by latching of their end walls. Such endwall latching can result in inadvertent disengagement of the latches (and resulting collapse of the RPC) during carrying and stacking due to the exertion of lateral forces against the handles or end walls. This can result in damage to the contents of the container. As indicated above, an exemplary embodiment of the container has a unique design that employs latching of the sidewalls **12,** which reduces inadvertent disengagement, since lateral force against the handles and end walls during carrying and stacking will not disengage the latches. In addition, the use of "L" hooks **50** to couple each sidewall **12** to each endwall **11** will further counteract any lateral forces on the handles and endwalls. FIG. 8 depicts a cross section of a sidewall **12** and endwall **11** when coupled through the use of "L" hooks **50.** It will be appreciated that, although according to this aspect of the invention sidewalls are latched to the endwalls, other aspects of the invention such as the arrangement and other container designs described herein may have other sidewall to endwall coupling designs.

In an exemplary embodiment, one or more of the sidewalls **12** or endwalls **11** will have an opening within which a door **40** is mounted in such a way that does not cut through the perimeter of the sidewall **12** or endwall **11.** Such door **40,** which can be constructed from the same material as the sidewall **12** or endwall **11,** can be hingeably mounted or attached to the opening to allow the door **40** to pivot and be opened and closed. Opening the door **40** permits visual inspection and/or sampling of the product in the container **10,** even when the container is within a stack of other containers on a pallet. The door **40** can be closed again, renewing the protective barrier that the endwall **11** or sidewall **12** provides to the contents of the container **10** in storage or transport. Preferably, when the door **40** is in the closed position, the door **40** is coupled or attached to the sidewall **12** or endwall **11** by a clip **41** that prevents the door **40** from opening without user action.

FIG. 7 and FIG. 7a depict an exemplary embodiment with the opening and door **40** in the sidewall, and the clip **41** having the form of a spring tang. This embodiment of the curved fruit sampling door **40** incorporates a clip **41** that, when engaged, holds the door **40** closed and when disengaged allows the door **40** to open to provide access to the contents of the container **10.** Preferably, the clip **41** is a "low profile spring tang" mechanism which fits within the thickness of the sidewall **12** or endwall **11,** not extending inside the curved surface of the sidewall **12** or endwall **11** or outside the plane as defined by the outside surface of the sidewall **12** or endwall **11.** The mechanism of the clip **41** is reusable, allowing for repeated opening and closing of the sample door **40.** The clip **41** is rotated outward to disengage the clip **41** and allow the door **40** to open. The door **40** and clip **41** are rotated inward with slight pressure to engage the clip **41** and the latch bracket **42.** Because of the door's **40** material, its hinged connection **47** and the use of the clip **41** to secure it, the door **40** can be opened and closed repeatedly throughout the life of the container **10** without affecting the structural integrity of the container, the protection of the product in the container, or the life of the container.

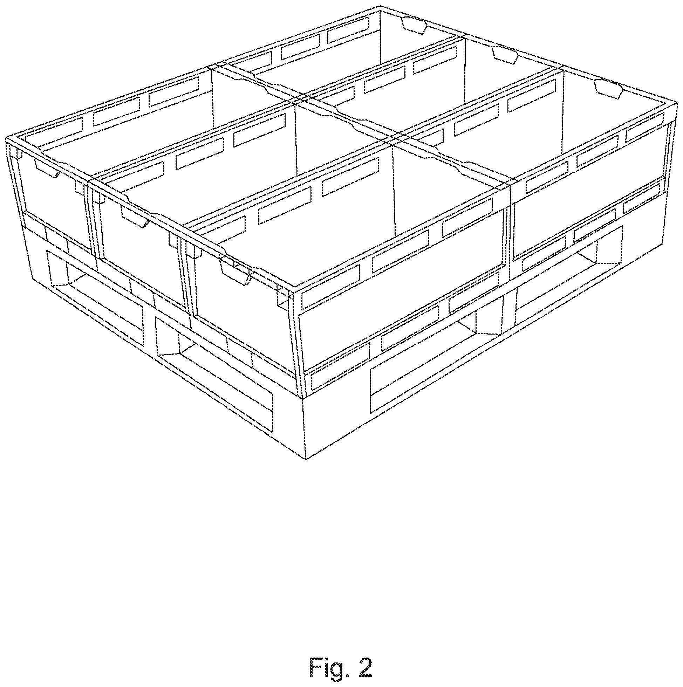

The invention is directed to an arrangement of plastic shipping containers for produce (e.g., bananas). The arrangement comprises (a.) a pallet having a top surface, the top surface having a pallet length and a pallet width, (b.) six shipping containers each having a container length and a container width arranged on the top surface of the pallet in a layer. The containers are arranged in two rows, each row having three containers. Each of the six shipping containers has its container width extend in the direction of a row and in the direction of the pallet width and having its container length extend in the direction of the pallet length. The arrangement further comprises bananas in each container, the bananas disposed in a three-line configuration with their crowns facing down. In some embodiments, it is desirable to have the maximum possible length of a container **10** without overhanging the pallets on which a container or multiple containers are placed. In a preferred embodiment, the dimensions of the container **10** are optimized for use in a particular product market or supply chain. In the case of an exemplary embodiment of the container for use with bananas, where 40-inch by 48-inch pallets are customarily used, the optimum exterior length for a container **10** is about **24** inches (about **60.9** cm) and the optimum exterior width is about 13.33 inches (about 33.9 cm). With these dimensions, the container **10** could be placed on pallets in a six-down configuration, a pallet loading pattern with three (3) containers across the approximately 40-inch dimension of the pallet and two (2) containers across the approximately 48-inch dimension. See FIG. 2 and FIG. 3 for illustrations of a "six-down" configuration. Although the above specifications for dimensions of pallets and containers are appropriate in North American markets, it will be appreciated that aspects of the invention can be applied to pallets and containers having other dimensions within aspects of the present invention and may be used in other parts of the world and in selected applications in North America.

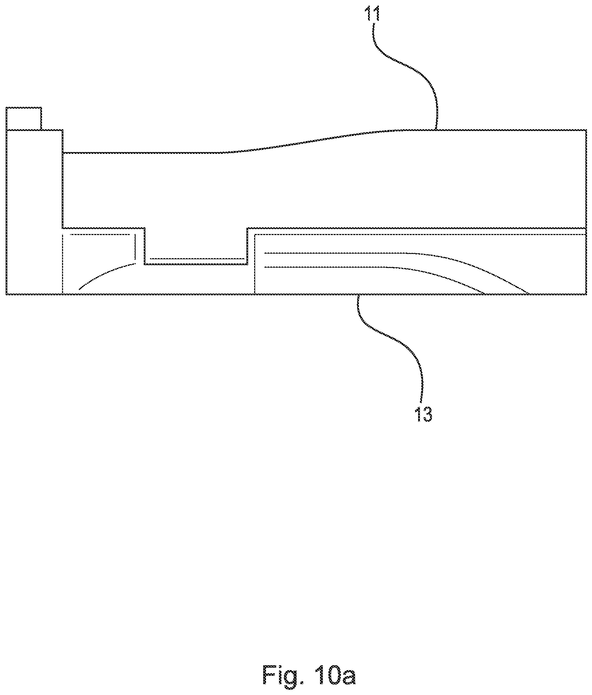

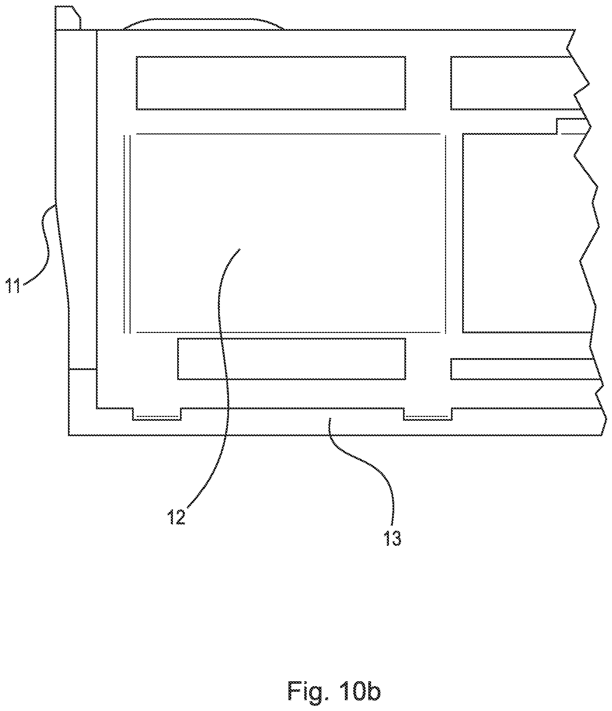

In the North American retail supply chain, containers are likely to be mixed with conventional RPCs that are only about 23.5 inches (about **60** cm) in exterior length (i.e., maximum exterior length). Accordingly, it is desirable for the container **10** to be about 24 inches long (i.e., maximum exterior length) when erected and filled with bananas, but only about 23.5 inches long when folded down to facilitate mixing of empty folded crates on pallets. In some embodiments, the novel design approach accomplishes the increased length when erected, but does so without increasing the height of folded containers **10** to optimize the number of containers **10** that can be packed on pallets for return. FIG. **10a** depicts the profile of one end of the container when in the "collapsed" configuration. Fig. **10b** depicts the profile of the same end of the container when in the "erected" configuration, showing the additional length of the container in the "erected" configuration when compared to the length of the container in the "collapsed" configuration. That is, a maximum exterior length between opposite walls of the container is greater than the maximum length of the base. It is to be appreciated that, as a result of the exterior dimension being greater, a corresponding interior dimension can be increased. The approximately **24**-inch length when erected maximizes banana capacity and eliminates pallet underhang that exists with other RPCs. These dimensions also close gaps between pallets for better transport stability and airflow. This brings the added benefit that corner boards can be properly used to prevent the flow of air between pallet loads in ripening rooms, so that ripening can be more precisely controlled. In some embodiments, a maximum, exterior width between opposite walls of the container is greater than the maximum width of the base. It will be appreciated that collapsible containers according to aspects of the present invention may have dimensions as set forth above or other dimension for use in North America or other markets.

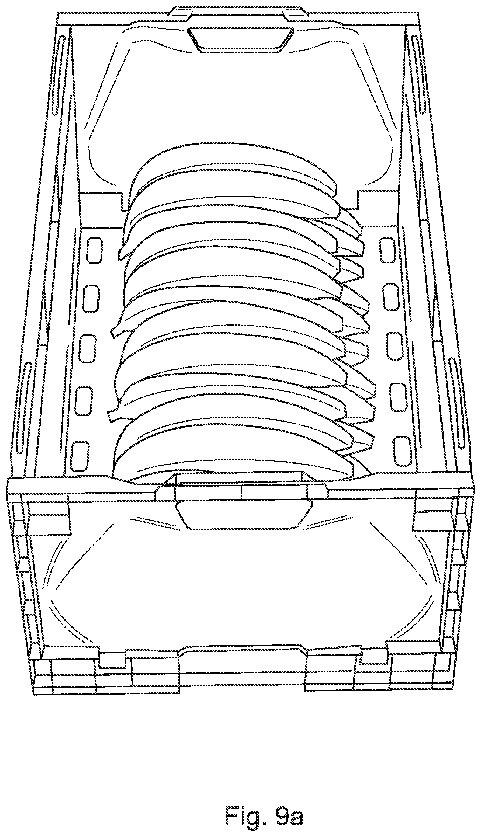

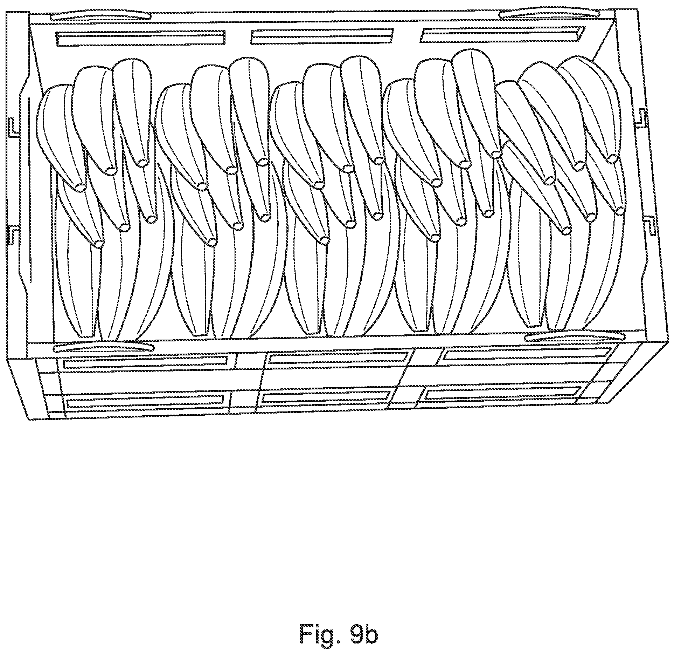

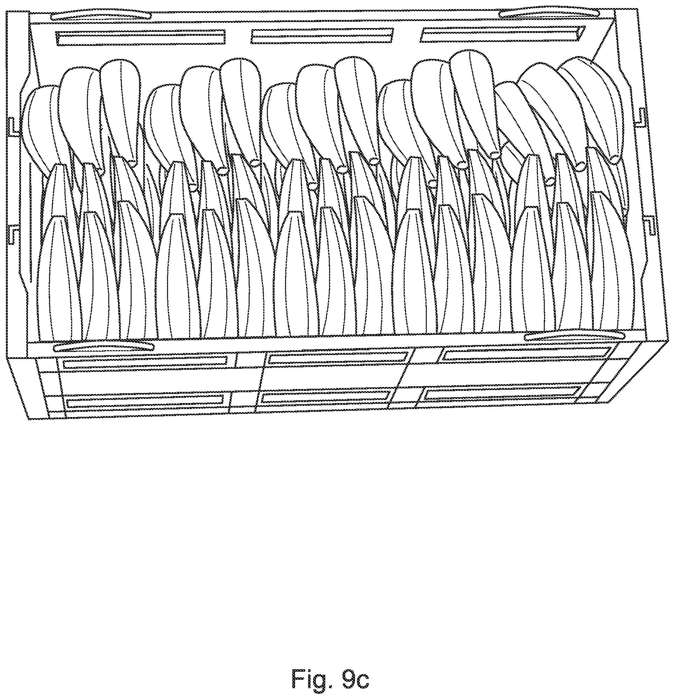

In a preferred embodiment, a container **10** with an exterior measuring approximately 24 inches long by approximately 13.33 inches wide results in interior dimensions that facilitate packing of three (3) longer lines of curved fruit (e.g., bananas) per container. Three (3) lines don't pile as tall as the four-line arrangement commonly used in conventional banana containers, and this lower packing height results in less "high pack" damage to the banana in the container. FIG. 9a depicts the first line of packing of bananas. FIG. 9b depicts the second line of bananas packed over the first line, partially overlapping it. Finally, FIG. 9c depicts the third line of bananas packed, which also partially overlaps the first line. A preferred embodiment also includes added height to the container **10** to prevent "high pack" damage, with the preferred exterior height for a container for bananas being approximately 9.66 inches.

In a preferred embodiment, the container **10** includes some extra material **60** in its dimensions to promote easier stacking without the need for perfect alignment. In an exemplary embodiment, this lead-in material **60** includes about 1/8 inch to 1/2 inch lead-in in both the length and width dimensions for easier stacking. Exemplary containers can also be slid in and out of place for easier stacking and de-stacking as a result of this lead-in material.

In another embodiment, the endwalls **12** and sidewalls **11** are optimized for the storage of transportation of pineapples, specifically through the use of wall shaping and recessed areas designed to protect the barrels and crowns of pineapples, and the ability to adjust the height of the container **10** at the time of packing to closely fit the pineapples in the container.

## Claims

1. An arrangement of plastic shipping containers (10) comprising bananas, the arrangement comprising:
a pallet having a top surface, the top surface having a pallet length and a pallet width;
six shipping containers (10) each having a container length and a container width arranged on the top surface of the pallet in a layer, **characterised in that** the containers (10) are arranged in two rows, each row having three of the containers (10), each of the six shipping containers (10) having its container width extend in the direction of the rows and in the direction of the pallet width and having its container length extend in the direction of the pallet length; and
bananas in each container (10), the bananas disposed in a three-line configuration with their crowns facing down.

2. The arrangement of claim 1, wherein the pallet length is about 121.9 cm and the pallet width is about 101.6 cm.

3. The arrangement of claim 2, wherein each of the containers (10) has a maximum exterior length of about 61 cm and a maximum exterior width of about 33 cm.

4. The arrangement of claim 1, wherein the bananas in each container (10) weight about 18 kg.

5. The arrangement of claim 1, wherein each of the containers (10) comprises a base (13), two endwalls (11), and two sidewalls (12), each of the endwalls (11) and each of the sidewalls (12) being moveably connected to the base (13),
each of the sidewalls (12) detachably coupled to the two endwalls (11) to allow the container (10) to assume an erected configuration when the sidewalls (12) and endwalls (11) are all upright, and a folded-down configuration when the sidewalls (12) and endwalls (11) are all folded down.

6. The arrangement of claim 5, wherein each of the containers (10) has a greater maximum, exterior length and/or a greater maximum, exterior width in the erected configuration than in the folded-down configuration.

7. The arrangement of claim 6, wherein each of the containers (10), in the erected configuration, has a maximum exterior length of about 61 cm and a maximum exterior width of about 33 cm.

8. The arrangement of claim 5, wherein each of the sidewalls (12) and the endwalls (11) is moveably connected to the base (13) using a plurality of hinges (45).

9. The arrangement of claim 5, wherein each container (10) comprises a plurality of vent holes in each of its sidewalls (12) or each of its endwalls (11),
at least one of the containers (10) arranged so that at least some of its plurality of vent holes completely or substantially align with at least some of the plurality of vent holes of the sidewalls (12) or endwalls (11) of at least one other container (10).

10. The arrangement of claim 5, wherein each container (10) comprises a plurality of vent holes in each of its sidewalls (12),
at least one of the containers (10) arranged so that at least some of its plurality of vent holes completely or substantially align with at least some of the plurality of vent holes of the sidewalls (12) of at least one other container (10).

11. The arrangement of claim 5, wherein each of the containers (10) comprises a sample door (40) that is moveably connected to at least one of the sidewalls (12) and endwalls (11).

12. The arrangement of claim 1, wherein each of the containers (10) has a substantially flat and smooth interior floor and substantially smooth exterior floor.

13. The arrangement of claim 1, wherein each of the plastic shipping containers (10) comprises at least one of a resin and a thermoplastic.

14. The arrangement of claim 1, further comprising a second plurality of containers (10) each having bananas therein, the second plurality of containers (10) arranged to form seven additional layers of containers (10) arranged above the first layer, wherein each of the additional layers comprises six shipping containers (10) of the second plurality of containers (10) each having a container length and a container width, the containers (10) in each of the additional layers arranged in two rows each row having three of the second plurality of containers (10), each of the six shipping containers (10) of the second plurality of shipping containers (10) having its container width extend in the direction of a row and in the direction of the pallet width and having its container length extend in the direction of the pallet length, the bananas in each of the second plurality of containers (10) disposed in a three-line configuration with their crowns facing down.

## Patentansprüche

1. Anordnung aus Kunststoff-Versandbehältern (10) mit Bananen, wobei die Anordnung aufweist:
eine Palette mit einer Oberseite, wobei die Oberseite eine Palettenlänge und eine Palettenbreite hat;
sechs Versandbehälter (10) mit jeweils einer Behälterlänge und einer Behälterbreite, die auf der Oberseite der Palette in einer Schicht angeordnet sind, **dadurch gekennzeichnet, dass** die Behälter (10) in zwei Reihen angeordnet sind, wobei jede Reihe drei der Behälter (10) hat, bei jedem der sechs Versandbehälter (10) sich seine Behälterbreite in Richtung der Reihen und in Richtung der Palettenbreite erstreckt und sich seine Behälterlänge in Richtung der Palettenlänge erstreckt; und
Bananen in jedem Behälter (10), wobei die Bananen in einer Dreizeilenkonfiguration mit ihren Kronen nach unten weisend angeordnet sind.

2. Anordnung nach Anspruch 1, wobei die Palettenlänge etwa 121,9 cm beträgt und die Palettenbreite etwa 101,6 cm beträgt.

3. Anordnung nach Anspruch 2, wobei jeder der Behälter (10) eine maximale Außenlänge von etwa 61 cm und eine maximale Außenbreite von etwa 33 cm hat.

4. Anordnung nach Anspruch 1, wobei die Bananen in jedem Behälter (10) etwa 18 kg wiegen.

5. Anordnung nach Anspruch 1, wobei jeder der Behälter (10) eine Unterseite (13), zwei Stirnwände (11) und zwei Seitenwände (12) aufweist, wobei jede der Stirnwände (11) und jede der Seitenwände (12) mit der Unterseite (13) beweglich verbunden sind,
jede der Seitenwände (12) mit den beiden Stirnwänden (11) abnehmbar gekoppelt ist, damit der Behälter (10) eine aufgerichtete Konfiguration, wenn die Seitenwände (12) und Stirnwände (11) alle aufrecht stehen, und eine zusammengeklappte Konfiguration einnehmen kann, wenn die Seitenwände (12) und Stirnwände (11) alle zusammengeklappt sind.

6. Anordnung nach Anspruch 5, wobei jeder der Behälter (10) eine größere maximale Außenlänge und/oder eine größere maximale Außenbreite in der aufgerichteten Konfiguration als in der zusammengeklappten Konfiguration hat.

7. Anordnung nach Anspruch 6, wobei jeder der Behälter (10) in der aufgerichteten Konfiguration eine maximale Außenlänge von etwa 61 cm und eine maximale Außenbreite von etwa 33 cm hat.

8. Anordnung nach Anspruch 5, wobei jede der Seitenwände (12) und der Stirnwände (11) mit Hilfe mehrerer Scharniere (45) mit der Unterseite (13) beweglich verbunden ist.

9. Anordnung nach Anspruch 5, wobei jeder Behälter (10) mehrere Belüftungslöcher in jeder seiner Seitenwände (12) oder jeder seiner Stirnwände (11) aufweist, wobei mindestens einer der Behälter (10) so angeordnet ist, dass mindestens einige seiner mehreren Belüftungslöcher zu mindestens einigen der mehreren Belüftungslöcher der Seitenwände (12) oder Stirnwände (11) mindestens eines anderen Behälters (10) vollständig oder im Wesentlichen ausgerichtet sind.

10. Anordnung nach Anspruch 5, wobei jeder Behälter (10) mehrere Belüftungslöcher in jeder seiner Seitenwände (12) aufweist,
wobei mindestens einer der Behälter (10) so angeordnet ist, dass mindestens einige seiner mehreren Belüftungslöcher zu mindestens einigen der mehreren Belüftungslöcher der Seitenwände (12) mindestens eines anderen Behälters (10) vollständig oder im Wesentlichen ausgerichtet sind.

11. Anordnung nach Anspruch 5, wobei jeder der Behälter (10) eine Probenklappe (40) aufweist, die mit mindestens einer der Seitenwände (12) und Stirnwände (11) beweglich verbunden ist.

12. Anordnung nach Anspruch 1, wobei jeder der Behälter (10) einen im Wesentlichen flachen und glatten Innenboden und einen im Wesentlichen glatten Außenboden hat.

13. Anordnung nach Anspruch 1, wobei jeder der Kunststoff-Versandbehälter (10) ein Harz und/oder einen thermoplastischen Kunststoff aufweist.

14. Anordnung nach Anspruch 1, die ferner mehrere zweite Behälter (10) mit jeweils Bananen darin aufweist, wobei die mehreren zweiten Behälter (10) so angeordnet sind, dass sie sieben zusätzliche Schichten aus Behältern (10) bilden, die über der ersten Schicht angeordnet sind, wobei jede der zusätzlichen Schichten sechs Versandbehälter (10) der mehreren zweiten Behälter (10) mit jeweils einer Behälterlänge und einer Behälterbreite aufweist, die Behälter (10) in jeder der zusätzlichen Schichten in zwei Reihen angeordnet sind, jede Reihe drei der mehreren zweiten Behälter (10) hat, bei jedem der sechs Versandbehälter (10) der mehreren zweiten Versandbehälter (10) sich seine Behälterbreite in Richtung einer Reihe und in Richtung der Palettenbreite erstreckt und sich seine Behälterlänge in Richtung der Palettenlänge erstreckt und die Bananen in jedem der mehreren zweiten Behälter (10) in einer Dreizeilenkonfiguration mit ihren Kronen nach unten weisend angeordnet sind.

## Revendications

1. Agencement de conteneurs de fret en plastique (10) contenant des bananes, l'agencement comprenant :
une palette ayant une surface supérieure, la surface supérieure ayant une longueur de palette et une largeur de palette ;
six conteneurs de fret (10) ayant chacun une longueur de conteneur et une largeur de conteneur, agencés sur la surface supérieure de la palette sur une couche, **caractérisé en ce que** les conteneurs (10) sont agencés sur deux rangées, chaque rangée ayant trois conteneurs (10), chacun des six conteneurs de fret (10) ayant sa largeur de conteneur étendue dans la direction des rangées et dans la direction de la largeur de palette et ayant sa longueur de conteneur étendue dans la direction de la longueur de palette ; et
des bananes dans chaque conteneur (10), les bananes étant disposées dans une configuration à trois lignes avec leurs sommets orientés vers le bas.

2. Agencement selon la revendication 1, dans lequel la longueur de palette est d'environ 121,9 cm et la largeur de palette est d'environ 101,6 cm.

3. Agencement selon la revendication 2, dans lequel chacun des conteneurs (10) a une longueur extérieure maximum d'environ 61 cm et une largeur extérieure maximum d'environ 33 cm.

4. Agencement selon la revendication 1, dans lequel les bananes dans chaque conteneur (10) pèsent environ 18 Kg.

5. Agencement selon la revendication 1, dans lequel chacun des conteneurs (10) comprend une base (13), deux parois d'extrémité (11) et deux parois latérales (12), chacune des parois d'extrémité (11) et chacune des parois latérales (12) étant raccordées de manière mobile à la base (13),
chacune des parois latérales (12) étant couplée de manière détachable aux deux parois d'extrémité (11) pour permettre au conteneur (10) d'adopter une configuration droite lorsque les parois latérales (12) et les parois d'extrémité (11) sont droites, et une configuration pliée lorsque les parois latérales (12) et les parois d'extrémité (11) sont toutes pliées.

6. Agencement selon la revendication 5, dans lequel chacun des conteneurs (10) a une longueur extérieure maximum plus importante et/ou une largeur extérieure maximum plus importante dans la configuration droite que dans la configuration pliée.

7. Agencement selon la revendication 6, dans lequel chacun des conteneurs (10), dans la configuration droite, a une longueur extérieure maximum d'environ 61 cm et une largeur extérieure maximum d'environ 33 cm.

8. Agencement selon la revendication 5, dans lequel chacune des parois latérales (12) et des parois d'extrémité (11) est raccordée de manière mobile à la base (13) en utilisant une pluralité de charnières (45).

9. Agencement selon la revendication 5, dans lequel chaque conteneur (10) comprend une pluralité de trous d'évent dans chacune de ses parois latérales (12) ou chacune des ses parois d'extrémité (11),
au moins l'un des conteneurs (10) est agencé de sorte qu'au moins certains de sa pluralité de trous d'évent s'alignent complétement ou sensiblement avec au moins certains de la pluralité de trous d'évent des parois latérales (12) ou des parois d'extrémité (11) d'au moins un autre conteneur (10).

10. Agencement selon la revendication 5, dans lequel chaque conteneur (10) comprend une pluralité de trous d'évent dans chacune de ses parois latérales (12),
au moins l'un des conteneurs (10) est agencé de sorte qu'au moins certains de sa pluralité de trous d'évent s'alignent complètement ou sensiblement avec au moins certains de la pluralité de trous d'évent des parois latérales (12) d'au moins un autre conteneur (10).

11. Agencement selon la revendication 5, dans lequel chacun des conteneurs (10) comprend une porte d'échantillon (40) qui est raccordée de manière mobile à au moins l'une parmi les parois latérales (12) et les parois d'extrémité (11) .

12. Agencement selon la revendication 1, dans lequel chacun des conteneurs (10) a un plancher intérieur sensiblement plat et lisse et un plancher extérieur sensiblement lisse.

13. Agencement selon la revendication 1, dans lequel chacun des conteneurs de fret en plastique (10) comprend au moins l'un parmi une résine et un thermoplastique.

14. Agencement selon la revendication 1, comprenant en outre une seconde pluralité de conteneurs (10) ayant chacun des bananes à l'intérieur de ces derniers, la seconde pluralité de conteneurs (10) étant agencée pour former sept couches supplémentaires de conteneurs (10) agencées au-dessus de la première couche, dans lequel chacune des couches supplémentaires comprend six conteneurs de fret (10) de la seconde pluralité de conteneurs (10) ayant chacun une longueur de conteneur et une largeur de conteneur, les conteneurs (10) dans chacune des couches supplémentaires étant agencés dans deux rangées, chaque rangée ayant trois de la seconde pluralité de conteneurs (10), chacun des six conteneurs de fret (10) de la seconde pluralité de conteneurs de fret (10) ayant sa largeur de conteneur étendue dans la direction d'une rangée et dans la direction de la largeur de palette et ayant sa longueur de conteneur étendue dans la direction de la longueur de palette, les bananes dans chacun de la seconde pluralité de conteneurs (10) étant disposées dans une configuration à trois lignes avec leurs sommets orientés vers le bas.
